# EUROPEAN PATENT SPECIFICATION

(11) **EP 0 566 337 B1**
(45) Date of publication and mention of the grant of the patent: **27.11.1996**
(21) Application number: 93302815.1
(22) Date of filing: 08.04.1993
(51) Int. Cl.: G01L 1/22, A61B 5/103, G06K 11/12

(54) **Matrix type surface pressure distribution detecting element**
Detektorelement für Oberflächen-Druckverteilung des Matrixtyps
Elément détecteur de répartition de pression en surface du type matrice

(30) Priority: 17.04.1992 JP 124285/92
(43) Date of publication of application: 20.10.1993
(73) Proprietor: ENIX CORPORATION, Shinjuku-ku, Tokyo (JP)
(72) Inventor: Tamori, Teruhiko, Iruma-shi, Saitama (JP)
(74) Representative: Lawrence, John Gordon

(56) References cited:
- EP-A- 0 071 269
- US-A- 4 658 233
- PATENT ABSTRACTS OF JAPAN vol. 13, no. 215 (P-874) 19 May 1989 & JP-A-01 032 138 (FUJIKURA LTD.) 2 February 1989
- PATENT ABSTRACTS OF JAPAN vol. 11, no. 277 (E-538) 8 September 1987 & JP-A-62 076 785 (TOYOTA CENTRAL RES & DEV LAB INC) 8 April 1987

## Description

The invention relates to a semiconductor matrix type surface pressure detecting element and more particularly to means for reading small-surface pressure distributions, such as result from the ridges and valleys of a fingerprint pattern.

For convenience of expression, following specification and claims use the terms "row, column, horizontal, vertical, and matrix" to describe an orthogonal array. These terms do not necessarily identify any particular orientation other than the orthogonal relationship. Also, the invention is described below in terms of MOS field effect transistors. However, it should be understood that other types of transistors may also be used. Therefore, in the following specification and claims, the references to MOS field effect transistors should be construed to mean any suitable transistor.

A fingertip is an example of a device for applying a very small-surface pressure distribution in a fixed pattern. In a conventional fingerprint pattern detecting apparatus, a fingertip is brought into contact with one surface of a prism which is irradiated with light. The light is reflected with reverberation from the prism surface and is received by a photo-detector element, such as a CCD (charged couple device). The fingerprint pattern is detected in accordance with an output signal from the photo-detector element.

However, this method is susceptible to adverse influences, such as those resulting from sweat and moisture, to an extent that a fingerprint pattern cannot be accurately detected and read. The sweat of the person who had his fingerprint last measured may still be on the surface of the prism to cause measurement errors, resulting in false readings and inconvenience to the person whose fingerprints are being read.

In greater detail, the residue may absorb light irradiated from outside for measurement of a finger print. Because of the residue, there is little reflection of the light from the surface of the prism, resulting in failure of measurement of the finger print. There may also be many other causes of false readings. A failure of the measurement of a finger print may not only be due to the residue from the sweat of a person who previously measured his finger print, but also may be a result of moisture from anywhere, such as ambient humidity, rain, or the like. Dryness may also cause false readings due to a failure of the measurement to correctly detect a total reflection of the light from the surface of the prism. Therefore, a finger print pattern cannot always be accurately detected by a light reading method.

In addition, this prior art method requires a high power consumption and, therefore, is not suitable for battery powered readers. Thus, the described prior art fingerprint readers are not suitable for outdoor measurements, as by police who are working in the field.

In Japanese Patent Laid-Open No. 63-204374, the present inventor disclosed a detecting apparatus for reading a fingerprint responsive to the differentials of pressure or contact resulting in a surface pressure distribution detecting apparatus which was free from the above-mentioned problems of light reflection. According to this disclosure, the pattern is found from a change in conductivity caused by a pressure difference applied by the tops ("ridges") and bottoms ("valleys") of a skin surface forming a fingerprint. The detector responds to the pressure differences on a sheet of conductive rubber having a conductivity which is changed in accordance with the pressure. A scanning electrode matrix responded to the conductivity changes by giving signals in an on/off or digital manner.

The present inventor next described a surface pressure distribution detecting element in Japanese Patent Application No. 2-179735 and U.S. Patent No. 5,079,949. In this element, scanning electrodes extend in one direction on a hard substrate. The electrodes are spaced apart from each other at a predetermined pitch (50 to 100 µm). Resistance films are formed over the scanning electrodes. Stacked on the resistance films is a flexible film having a lower surface with scanning electrodes extends in perpendicular directions. The total resistance of the resistance films between the scanning electrodes is changed in accordance with the areas of the ridges of the fingerprint skin surface brought into contact with the resistance films, via the flexible film.

The inventor's prior surface pressure distribution detecting elements are free from the adverse influences of sweat and moisture. However, these elements face problems relating to material, structure, and manufacturing. It is difficult to find a practical and durable flexible film material which can accurately transmit the pressure distribution of the skin surface and can assure a deposition of the scanning electrodes, as by etching or the like. During the manufacturing process, it is also very difficult to position the scanning electrodes in rows and columns extending perpendicular to each other. Also, the pressure sensitivity of the element may vary depending on the lack of uniformity of quality.

In keeping with the invention, a large number of transistors, arranged in a matrix form, are manufactured on a single semiconductor substrate. The collector electrodes of a plurality of transistors are commonly connected in columns. The transistors in a column are commonly connected to each other, but are electrically separated from transistors in other columns. The base electrodes of a plurality of transistors are commonly connected to each other, row by row, with electrical separation between the rows of transistors. The rows are arranged perpendicular to the columns in order to form an orthogonal matrix.

The plurality of semiconductor switching elements are arranged in a matrix form, at a pitch of 10 to 100 µm on a semiconductor substrate. Each of these elements has one terminal which is exposed above the semiconductor surface. A flexible film having a conductive coating is positioned over the exposed terminals, to selectively operate the switching elements, thereby providing a surface pressure distribution detecting element. Bipolar transistors or MOS field effect transistors are used as the semiconductor switching elements.

When a fingerprint ridge applies a surface pressure from above, to the flexible film, the depressed portion of the film is flexed and brought into contact with one terminal of the semiconductor switching element which is located below the depressed portion so that the switching element is switched ON. Therefore, the surface pressure distribution applied by ridges of a fingerprint can be detected digitally by detecting the ON/OFF states of a plurality of semiconductor switching elements arranged in a matrix.

The invention will next be described in detail with reference to the accompanying drawings, in which:
Fig. 1 is a partially cross-sectional view of a semiconductor fingerprint sensor having a surface pressure distribution detecting element;
Fig. 2 is a plan view of an integrated circuit semiconductor chip forming a detection unit of a surface pressure distribution detecting element;
Fig. 3 is a cross-sectional view taken along a line 3-3' in Fig. 2, showing part of a row of electronic switches in the detection unit;
Fig. 4 is a cross-sectional view taken along a line 4-4' in Fig. 2, showing a single detection unit;
Fig. 5 shows an equivalent electrical circuit of the surface pressure distribution matrix of detecting elements;
Fig. 6 is a plan view of another embodiment of the present invention showing part of an integrated circuit semiconductor chip forming a detection unit of a surface pressure distribution detecting element;
Fig. 7 is a cross-sectional view taken along a line 7-7' in Fig. 6, showing a detection unit;
Fig. 8 is a plan view of a detection unit of a surface pressure distribution detecting element according to still another embodiment of the invention;
Fig. 9 is a cross-sectional view taken along a line 9-9' in Fig. 8, showing the detection unit; and
Fig. 10 is a block diagram showing a surface pressure distribution matrix of detecting element and its driving circuit.

In the following specification, the components identified by the reference numerals are, as follows: Ref. No. Part 1: p-type silicon substrate 2: n+-type buried layer 3: n-type epitaxial layer 4: p-type isolation layer 5: p-type base layer 6: n-type emitter layer 7: base electrode 8: emitter electrode (contact terminal) 9: silicon oxide film 10 : insulating protective film 11: film 12: conductive coating 13: n-type silicon substrate 14 : p-type well layer 15: n-type drain layer 16: n-type source layer 17: polysilicon gate 18: gate oxide film 19: drain electrode 20 : source electrode 21: insulating interlayer.

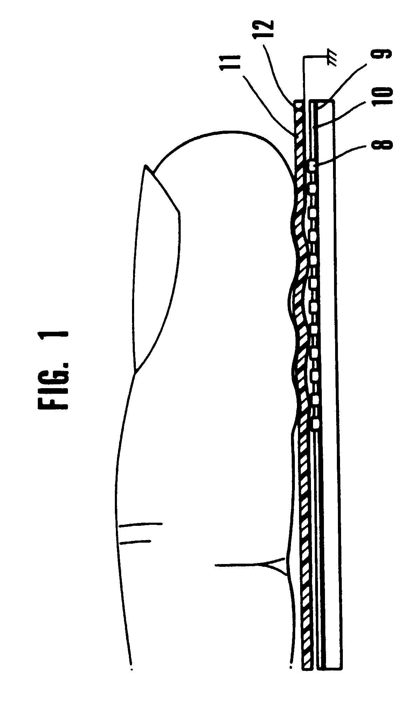

Fig. 1 is a partial cross-sectional view of an inventive fingerprint pattern detection semiconductor sensor having a surface pressure distribution detecting element. A semiconductor manufacturing process forms this fingerprint sensor on a semiconductor substrate 1. Placed over the detection unit is a flexible film 11 made of a polyester or polyamide film having a thickness of about 10 µm. A conductive coating 12 is deposited, or otherwise formed, on the undersurface of the film 11. Fig. 1 shows only the emitter electrodes 8, a silicon oxide film 9, and an insulating protective film 10, which taken together, constitute the detection unit.

When the tip of a finger F lightly depresses the film 11, the grounded conductive coating 12 on the undersurface of the film 11 is brought into contact with the emitter electrodes 8 of an array of transistors, according to the pattern of fingerprint ridges. Located below the depressed portion of film 11, in contact with the tops (ridges) of the skin surface, the emitter electrodes 8 are grounded through the conductive coating 12 according to the fingerprint pattern.

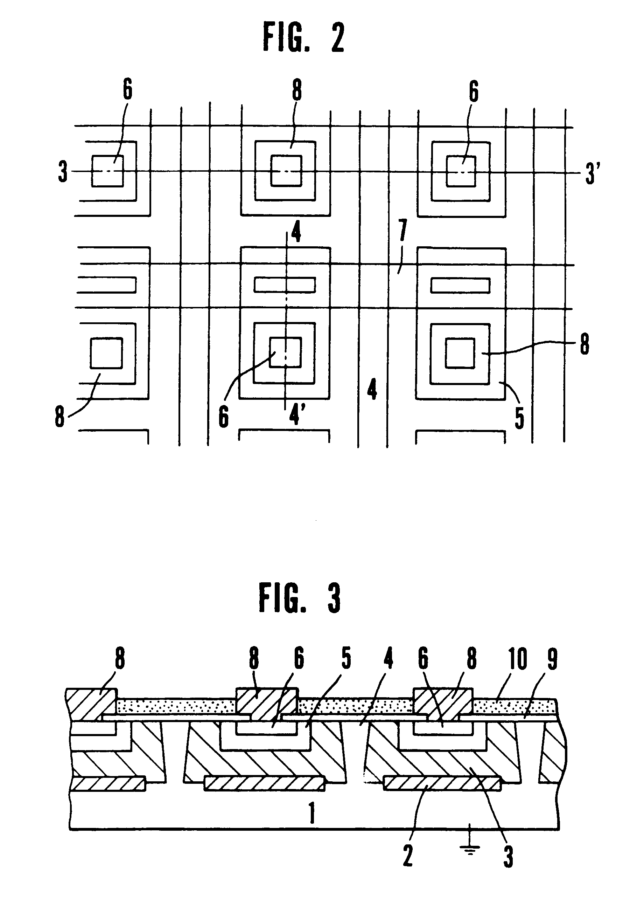

The structure of the detection unit shown in Figs. 2 to 4 uses bipolar transistors as the semiconductor switching elements. In greater detail, when the semiconductor fingerprint sensor chip is manufactured, an n+-type buried layer 2 (Fig. 3) is partially formed on the p-type semiconductor substrate 1. An n-type epitaxial layer 3 is subsequently grown on the resultant structure. A p-type isolation layer 4, a p-type base layer 5, and an n-type emitter layer 6 are formed on the resultant structure. Thereafter, a silicon oxide film 9 is formed. The parts of the silicon oxide film 9 which are on the p-type base layer 5 and the n-type emitter layer 6 are removed.

Subsequently, base electrodes 7 and emitter electrodes 8 are formed. The insulating protective film 10 completely covers all of the resultant structure except for the emitter electrodes 8. Emitter electrodes 8 are part of a matrix of contact terminals arranged in rows and columns. These electrodes will be grounded according to the pattern of fingerprint ridges. Preferably, the emitter electrode 8 is made of gold ("Au").

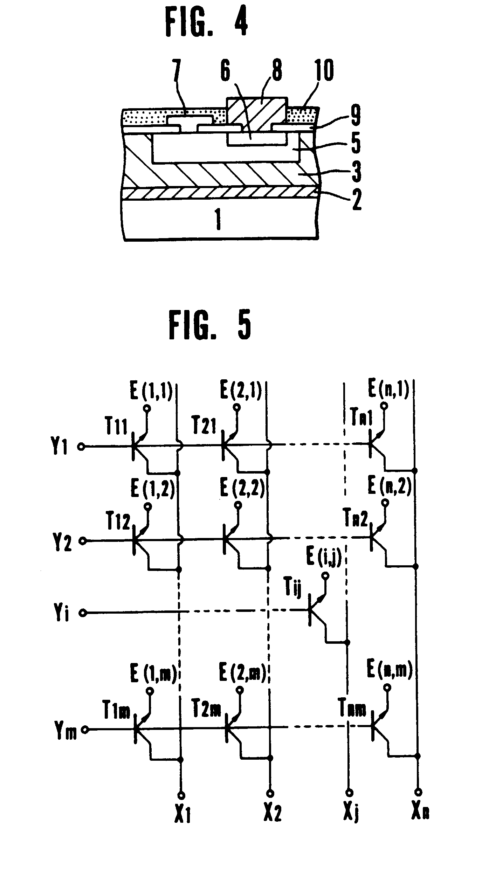

The operation of the inventive fingerprint sensor is described next, with reference to the equivalent circuit shown in Fig. 5. More particularly, the detection unit of the fingerprint sensor is a matrix comprising rows of n transistors extending in a horizontal direction and columns of m transistors extending in a vertical direction. The base electrodes of the n transistors (e.g., transistors T₁₁, T₂₁,..., Tₙ₁), arranged in the row or horizontal direction, are commonly connected to each other. The respective common base terminals are identified as Y₁, Y₂,..., Yₘ. The collector electrodes of the m transistors (e.g., T₁₁, T₁₂,..., T₁ₘ), are arranged in columns extending in the vertical direction. The collectors in any column are commonly connected to each other, the respective common collector terminals being identified as X₁, X₂,..., Xₙ.

Assume that the common base terminal Y₁ of a row of transistors extending in the horizontal direction is set at a given potential, and further that a collector voltage is sequentially applied to scan the individual common collector terminals, from X₁ to Xₙ. Each common collector terminal relates to an individual column of transistors, extending in the vertical direction. If the film 11 of the fingerprint sensor is depressed by a ridge of a fingerprint to cause the corresponding emitter electrode 8 to come into contact with the grounded conductive coating 12 on the undersurface of the film 11, the corresponding emitter contact terminal (e.g., a terminal E_{(i,j)}), is at the ground potential. The corresponding transistor Tᵢⱼ is turned on, and a collector current flows therein. By monitoring this collector current, the transistor which has an emitter terminal in contact with film 11 can be identified.

When a common base terminal Yⱼ₊₁ is set at a given potential, and a collector voltage is sequentially applied to scan the common collector terminals from X₁ to Xₙ, the ON/OFF states of all transistors T_{1,j+1}, T_{2,j+1},..., T_{n,j+1} of the horizontal row or array Yⱼ₊₁ can be detected. By repeating the same procedure in order to scan the individual rows up to horizontal Yₘ, the ON/OFF states of all the transistors can be found.

In addition, it is possible to determine whether a contact area is large or small on a basis of the magnitude of a detected collector current. When a pressure acting on each terminal is increased, the contact area is increased accordingly. Since the contact area is increased, the contact resistance is decreased to increase the collector current. That is, a fine resolution of the pressure detection can be performed. Therefore, even a very small fingerprint pattern can be read.

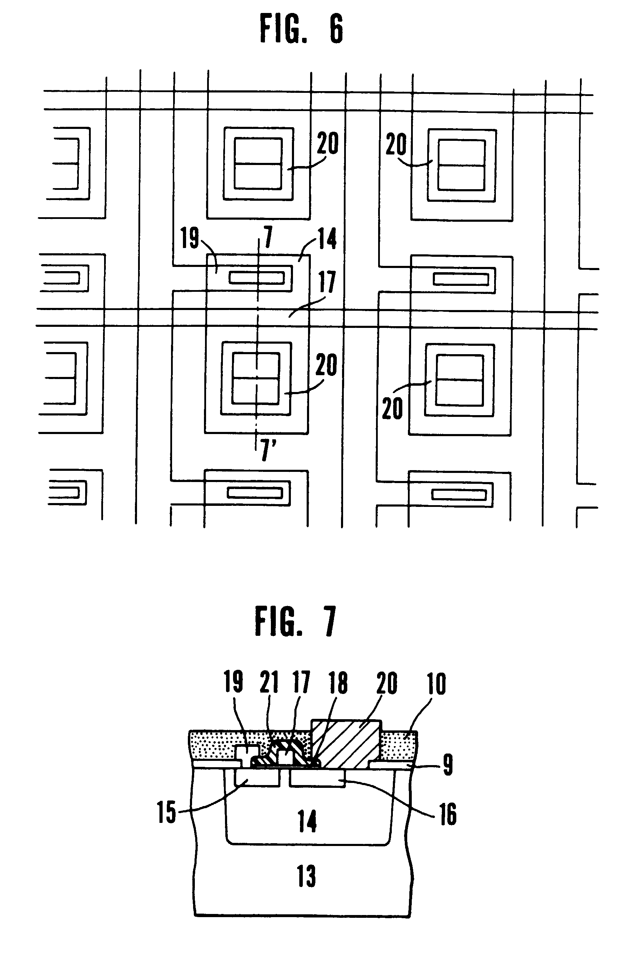

Figs. 6 and 7 are partial cross-sectional views showing another embodiment of the invention for detecting the surface pressure distribution, by using MOS field effect transistors as the semiconductor switching elements. In this embodiment, an n-type silicon substrate is used to form a MOS field effect transistor.

In greater detail, this embodiment is manufactured by using the same method that is used for manufacturing a normal MOS field effect transistor. For example, a p-type well layer 14 is formed in an n-type silicon substrate 13. Thereafter, a gate oxide film 18 and a gate polysilicon film 17 are formed sequentially. Phosphorus ions are implanted into the resultant structure by using the gate polysilicon film 17 as a mask so as to simultaneously form drain and source layers 15 and 16. After an insulating interlayer 21, such as a PSG layer, is formed to cover the gate polysilicon film 17. A contact window for a drain electrode is formed in the insulating interlayer 21. Then, a drain electrode wiring layer 19 is formed.

Subsequently, the surface of the resultant structure is covered with an insulating protective film 10 made of polyamide, or the like. A contact window is formed in film 10 for providing a source electrode 20 which serves as a contact terminal. Electrode 20 is made of a material having resistance to corrosion (e.g., Au), thus forming a detecting element.

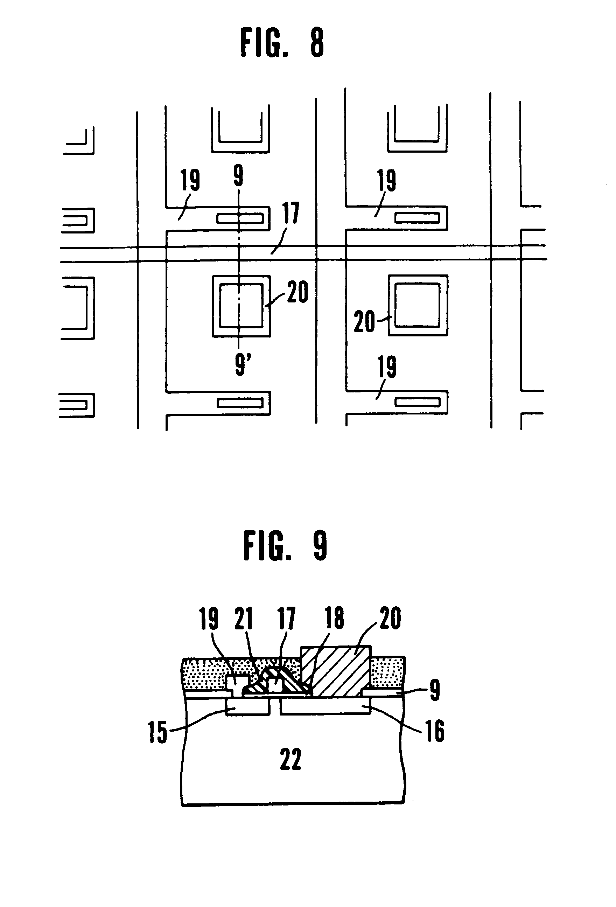

As shown in Fig. 9, a p-type silicon substrate 1 may be used to form MOS field effect transistors. In this embodiment, a detecting element is also manufactured by using the same method that is used for manufacturing a normal MOS field effect transistor. Hence, a description of the manufacturing methods will be omitted. Note that Fig. 8 is a plan view of the detection unit shown in Fig. 9.

The difference between the embodiments shown in Figs. 6 and 7 and Figs. 8 and 9, respectively, is that Figs. 6 and 7 require a silicon substrate which is positive (+) with respect to the source potential, while Figs. 8 and 9 require a negative (grounded) substrate. The operations of these elements can be understood by substituting MOS field effect transistors for the transistors in the first embodiment. That is, a gate, a drain, and a source, may be substituted for the base, collector, and emitter, respectively, of each transistor in order to form a matrix from rows and columns of transistors.

In comparison with the transistor embodiment of Figs. 2-5, the MOS field effect transistor embodiment is characterized as follows. Since no epitaxial and buried layers are required for the MOS field effect transistor embodiment, the detecting elements can be manufactured by a simple and low cost method. In addition, unlike a bipolar transistor, a MOS field effect transistor consumes no base current (requires only a gate voltage), thus reducing power consumption.

Although the above description has been made with reference to npn transistors or n-channel MOS field effect transistors, it is apparent that pnp transistors or p-channel MOS field effect transistors can also be used.

The distance between the ridges of a fingertip skin surface is about 200 to 300 µm. In both the first (transistor) and second (MOS field effect transistor) embodiments, the contact terminals may be arranged at a pitch in the range of 20 to 100 µm in order to more accurately detect the fingerprint pattern.

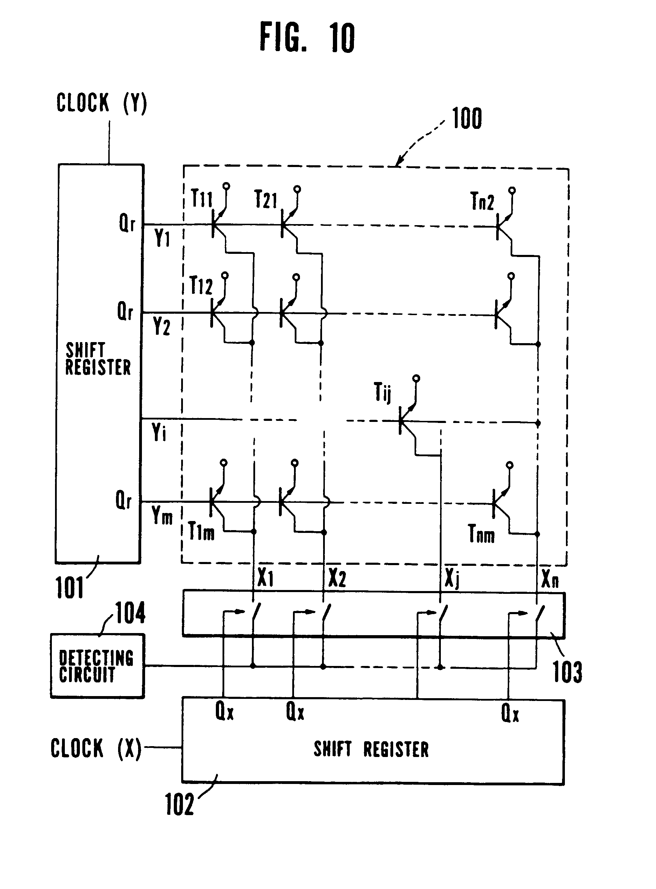

Fig. 10 is a block diagram showing a driving circuit for reading the inventive surface pressure distribution on the matrix detecting elements. .

The inventive fingerprint sensor (Fig. 10) has a surface pressure distribution detecting matrix 100 comprising rows of m common base terminals Y₁, Y₂, ..., Yₘ and columns of n common collector terminals X₁, X₂,..., Xₙ. Shift registers 101 and 102, switching circuit 103, detecting circuit 104, and matrix 100 are integrally formed on the same semiconductor chip. The shift register 101 sequentially applies scanning signals to the common base terminals Y₁-Yₘ. The shift register 102 generates scanning signals which are applied to the common collector terminals X₁, X₂,..., Xₙ. The switching circuit 103 sequentially switches the signals from the shift register 102 and applies them to the common collector terminals X₁, X₂,..., Xₙ of the matrix. The detecting circuit 104 detects the ON/OFF state of the switching circuit 103.

The shift registers 101 and 102, the switching circuit 103, and the detecting circuit 104 constitute the driving circuit. All are known; therefore, a more detailed description of these circuits will be omitted.

As described above, the surface pressure distribution detecting elements and their driving circuit are formed on the same semiconductor chip. A large number of extraction electrodes need not be formed in the X and Y directions. Only a minimum number of terminals are required, as compared with a device wherein a detecting element is used as a single unit. Therefore, the electrodes can be easily formed, and-a reduction in size of the element can be realized.

In operation, when surface pressure is applied to the flexible film 11 (Fig. 1), the depressed portion of the film is flexed. The emitter electrodes, or contact electrodes, of the transistors located at the depressed portions of the film are brought into contact with the conductive coating 12 on the flexible film. With this arrangement, there is no need to position scanning electrodes which cross each other, which would complicate the manufacturing process. In addition, the transistors are manufactured by the use of semiconductor manufacturing techniques which have already achieved a high technical perfection and precision, at a relatively low cost. The manufactured detecting elements are almost completely free from variations in sensitivity. Furthermore, since the film stacked on the surface of the surface pressure distribution matrix of detecting elements has only a conductive coating formed on the entire lower surface, the adhesion between the scanning electrodes and the film surface poses no problem. Therefore, no problem is posed in selecting a material for the film.

The conventional elements serves as a passive element of a simple matrix which detects the magnitude of a pressure caused change in contact resistance. However, the invention uses an active matrix of active elements to detect the magnitude of pressure at a collector or drain. Therefore, a high S/N ratio can be obtained because of an amplifying operation.

When an apparatus, such as a fingerprint detecting apparatus, is formed by using the surface pressure distribution matrix of detecting elements, both the matrix and a driving circuit for the element can be formed at the same time and on the same chip. Therefore, no wiring is required between the elements and the driving circuit. All of this leads to a small, compact apparatus.

In the above-described embodiments, when the flexible film receives a surface pressure, the conductive coating is brought into contact with the output electrode of a corresponding transistor, which is turned on. It is important that when the flexible film receives a surface pressure, the degree of contact of the conductive coating with the output electrode of a corresponding transistor is measured as a digital or analog value on the basis of an operating current flowing in the transistor.

## Claims

1. A surface pressure distribution matrix of detecting elements comprising a plurality of transistors arranged in a matrix form on a semiconductor substrate (1), each of said transistors having a first electrode (8) exposed on a surface of said substrate (1), said first electrodes (8) being arranged in said matrix form, a flexible film (11) mounted over said matrix of first electrodes (8), said film (11) having a conductive coating (12) formed on a surface confronting said semiconductor substrate (1) for selectively engaging said first electrodes (8) in a pattern corresponding to a pattern of pressure applied to said film (11), a second electrode on each of said transistors, said transistors being arranged in rows and columns on said semiconductor substrate (1) with said second electrodes being commonly connected in columns and with electrical isolation between said columns, a third electrode (7) on each of said transistors, said third electrodes (7) being commonly connected in rows with electrical isolation between said rows, a portion of said flexible film (11) which receives a surface pressure being deflected to touch at least one of said first electrodes (8) in order to cause a transistor at the pressure location to be turned on via its first electrode (8).

2. The matrix of claim 1 wherein means are provided for indicating a degree of contact pressure between the deflected portion of said film (11) and said first electrode (8).

3. The matrix of claim 2 wherein said degree of contact is indicated in response to a current appearing at said second electrode in said transistor, thereby detecting and indicating an area of surface pressure distribution on said touched first electrode (8) as a digital or analog value.

4. The matrix according to any of the previous claims wherein said first electrodes (8) are arranged in rows and columns at a pitch of 10 to 100 µm.

5. The matrix according to any of the previous claims further comprising first (101) and second (102) shift registers coupled to sequentially apply scanning signals to said common row and common column electrodes, respectively, and a detecting circuit (104) for detecting an ON/OFF state of each of said transistors in said matrix (100).

6. The matrix according to any one of the previous claims in which the first electrode (8) comprises an emitter electrode, the second electrode comprises a collector electrode and the third electrode (7) comprises a base electrode.

7. The matrix according to any of claims 1 to 5 in which the first electrode comprises a source electrode (20), the second electrode comprises a drain electrode (19) and the third electrode comprises a gate electrode (17).

8. The matrix according to any of claims 1 to 5 in which the first electrode comprises a drain electrode (19), the second electrode comprises a source electrode (20) and the third electrode comprises a gate electrode (17).

## Patentansprüche

1. Oberflächen-Druckverteilungs-Matrix aus Detektorelementen, welche eine Vielzahl von in einer Matrixform auf einem Halbleitersubstrat (1) angeordneten Transistoren aufweist, wobei jeder der Transistoren eine erste Elektrode (8) hat, die auf einer Oberfläche des Substrats (1) freigelegt ist, die ersten Elektroden (8) in der Matrixform angeordnet sind, ein flexibler Film (11) über der Matrix von ersten Elektroden (8) befestigt ist, welcher eine leitende Beschichtung (12) hat, die auf einer dem Halbleitersubstrat (1) zugewandten Oberfläche gebildet ist, für einen selektiven Eingriff der ersten Elektroden (8) in einem Muster entsprechend einem auf dem Film (11) ausgeübten Druckmuster, eine zweite Elektrode auf jedem der Transistoren, wobei die Transistoren in Reihen und Spalten auf dem Halbleitersubstrat (1) angeordnet sind und die zweiten Elektroden gemeinsam in Spalten verbunden sind mit einer elektrischen Isolierung zwischen den Spalten, eine dritte Elektrode (7) auf jedem der Transistoren, wobei die dritten Elektroden (7) gemeinsam in Reihen verbunden sind mit einer elektrischen Isolierung zwischen den Reihen, ein Bereich des flexiblen Films (11), welcher einen Oberflächendruck empfängt, ausgelenkt wird, um wenigstens eine der ersten Elektroden (8) zu berühren, damit bewirkt wird, daß ein Transistor an der Druckstelle über seine erste Elektrode (8) eingeschaltet wird.

2. Matrix nach Anspruch 1, worin Mittel vorgesehen sind zum Anzeigen eines Grades des Kontaktdrucks zwischen dem ausgelenkten Bereich des Films (11) und der ersten Elektrode (8).

3. Matrix nach Anspruch 2, worin der Grad des Kontakts angezeigt wird in Abhängigkeit von einem an der zweiten Elektrode in dem Transistor auftretenden Strom, wodurch eine Fläche der Oberflächen-Druckverteilung auf der ersten berührten Elektrode (8) als ein digitaler oder analoger Wert erfaßt und angezeigt wird.

4. Matrix nach einem der vorhergehenden Ansprüche, worin die ersten Elektroden (8) in Reihen und Spalten mit einer Teilung von 10 bis 100 µm angeordnet sind.

5. Matrix nach einem der vorhergehenden Ansprüche, weiterhin aufweisend ein erstes (101) und ein zweites (102) Schieberegister, die gekoppelt sind zum aufeinanderfolgenden Anlegen von Abtastsignalen an die gemeinsamen Reihen- bzw. gemeinsamen Spaltenelektroden, und eine Detektorschaltung (104) zum Erfassen eines EIN/AUS-Zustandes von jedem der Transistoren in der Matrix (100).

6. Matrix gemäß einem der vorhergehenden Ansprüche, in welcher die erste Elektrode (8) eine Emitterelektrode aufweist, die zweite Elektrode eine Kollektorelektrode aufweist und die dritte Elektrode(7) eine Basiselektrode aufweist.

7. Matrix nach einem der Ansprüche 1 bis 5, in welcher die erste Elektrode eine Sourceelektrode (20) aufweist, die zweite Elektrode eine Drainelektrode (19) aufweist und die dritte Elektrode eine Gateelektrode (17) aufweist.

8. Matrix nach einem der Ansprüche 1 bis 5, in welcher die erste Elektrode eine Drainelektrode (19) aufweist, die zweite Elektrode eine Sourceelektrode (20) aufweist und die dritte Elektrode eine Gateelektrode (17) aufweist.

## Revendications

1. Matrice d'éléments détecteurs de répartition de pression en surface, comprenant une pluralité de transistors disposés sous la forme d'une matrice sur un substrat de semiconducteur (1), chacun desdits transistors ayant une première électrode (8) exposée sur une surface dudit substrat (1), lesdites premières électrodes (8) étant disposées en ladite forme de matrice, un film flexible (11) monté sur ladite matrice de première électrodes (8), ledit film ayant un revêtement conducteur (12) formé sur une surface faisant face audit substrat de semiconducteur (1) pour engager sélectivement lesdites premières électrodes (8) selon un motif correspondant à un motif de pression appliqué audit film (11), une deuxième électrode sur chacun desdits transistors, lesdits transistors étant disposés en lignes et en colonnes sur ledit substrat de semiconducteur (1), lesdites deuxièmes électrodes étant connectées en commun en colonnes et avec un isolement électrique entre lesdites colonnes, une troisième électrodoe (7) sur chacun desdits transistors, lesdites troisièmes électrodes (7) étant connectées en commun en lignes avec un isolement électrique entre lesdites lignes, une partie dudit film flexible (11) qui reçoit une pression en surface étant déviée pour toucher au moins une desdites électrodes (8) pour amener un transistor situé à l'emplacement de la pression à être débloqué par l'intermédiaire de sa première électrode (8).

2. Matrice selon la revendication 1, dans laquelle des moyens sont prévus pour indiquer un degré de pression de contact entre la partie déviée dudit film (11) et ladite première électrode (8).

3. Matrice selon la revendication 2, dans laquelle ledit degré de contact est indiqué en réponse à un courant apparaissant dans ladite deuxième électrode dudit transistor, ce qui détecte et indique une zone de répartition de pression en surface sur ladite première électrode touchée (8) sous la forme d'une valeur en numérique ou analogique.

4. Matrice selon l'une quelconque des revendications précédentes, dans laquelle lesdites premières électrodes sont disposées en lignes et en colonnes avec un pas de 10 à 100 µm.

5. Matrice selon l'une quelconque des revendications précédentes, comprenant en outre des premier (101) et deuxième (102) registres à décalage couplés pour appliquer séquentiellement des signaux de balayage auxdites électrodes de lignes communes et électrodes de colonnes communes, respectivement, et un circuit détecteur (104) pour détecter un état débloqué/bloqué de chacun desdits transistors de ladite matrice (100).

6. Matrice selon l'une quelconque des revendications précédentes, dans laquelle la première électrode (8) est une électrode d'émetteur, la deuxième électrode est une électrode de collecteur et la troisième électrode (7) est une électrode de base.

7. Matrice selon l'une quelconque des revendications 1 à 5, dans laquelle la première électrode est une électrode de source (20), la deuxième électrode est une électrode de drain (19) et la troisième électrode est une électrode de grille (17).

8. Matrice selon l'une quelconque des revendications 1 à 5, dans laquelle la première électrode est une électrode de drain (19), la deuxième électrode est une électrode de source (20) et la troisième électrode est une électrode de grille (17).
